# EUROPEAN PATENT SPECIFICATION

(11) **EP 0 474 618 B1**
(45) Date of publication and mention of the grant of the patent: **27.02.2002**
(21) Application number: 91870137.6
(22) Date of filing: 02.09.1991
(51) Int. Cl.: C08F 279/02, C08F 2/02

(54) **High-gloss ABS made by continuous process**
Kontinuierlich hergestellte hochglänzende ABS
ABS à brillance élevée préparé par un procédé en continu

(30) Priority: 04.09.1990 US 576823; 04.09.1990 US 576758
(43) Date of publication of application: 11.03.1992
(73) Proprietor: BAYER ANTWERPEN N.V., 2040 Antwerpen (BE)
(72) Inventor: Aliberti, Vincent Anthony, Wilbraham, Massachusetts 01095 (US); Wu, Wan Chu, Longmeadow, Massachusetts 01106 (US)
(74) Representative: Klimiuk-Japadita, Meike

(56) References cited:
- FR-A- 2 246 594
- GB-A- 1 180 085
- GB-A- 1 264 210

## Description

### BACKGROUND OF THE INVENTION

This invention relates to a continuous mass process for the preparation of acrylonitrile-butadiene-styrene-ester polymers (ABSE) having a balance of gloss, tensile strength, impact strength, processability and heat resistance properties.

### DESCRIPTION OF THE PRIOR ART

Continuous mass ABS polymerization processes are taught in U.S. Patents 3,243,481, 3,337,650, 3,511,895, 4,417,030 and 4,559,386. The present invention represents an improvement over such processes in that ABSE made by the present invention has a better balance of properties, particularly a high gloss level in molded parts which is important in certain applications for aesthetic purposes.

GB-A-1,180,085 and GB-A-1,264,210 together with FR-A-2,246,594 reflect also the prior art.

### SUMMARY OF THE INVENTION

Disclosed herein is a continuous mass process for preparing ABSE compositions having a balance of performance properties.

It is a principal object of this invention to provide an improved process for preparing ABSE compositions.

Another object is to provide an ABSE composition with a desirable balance of properties.

The above objects are obtained by preparing ABSE compositions by a process which comprises the steps of (i) in a first reactor, continuously mass polymerizing a mixture of monomers comprising styrene, acrylonitrile and a polymerizable ester in the presence of a preformed graftable rubber to graft a portion of the polymerizing monomers onto said rubber, wherein a bimodal distribution of grafted rubber particles is formed; and (ii) continuing the polymerization in one or more subsequent reactors, wherein a bimodal distribution of rubber particles are formed; and then (iii) devolatilizing the ABSE composition.

The present invention comprises a continuous mass polymerization process for preparing an acrylonitrile-butadiene rubber-styrene-ester polymer having a matrix phase comprising a copolymer of styrene, acrylonitrile and an ethylenically unsaturated monomeric ester which is a whole or partial ester of a mono- or dicarboxylic acid and a dispersed phase comprising butadiene rubber particles having a grafted superstrate of a copolymer of styrene, acrylonitrile and said ester; wherein the polymer is characterized by having the following properties:
(a) a gloss level of at least 50%;
(b) an Izod impact of at least 120 JM;
(c) an IDI impact of at least 15 J;
(d) a tensile strength of at least 36 MPa;
(e) a melt viscosity (KPa-S) of less than 0.45;
wherein the rubber phase morphology is characterized by having a bimodal distribution of rubber particles wherein 10 to 30% of the rubber particles have a Dw of from 0.6 to 1.0 micrometers (µ) and 70 to 90% of the rubber particles have a Dw of from 0.2 to 0.6 micrometers and wherein the smaller particles are substantially free of occluded matrix polymers and wherein a majority of the large particles have a low level of occluded matrix polymer
and wherein in a major amount of the larger particles the occluded styrene acrylonitrile ester polymer is not in the form of discrete spheroids, but rather in the form of an interpenetrating network;
which process comprises:
(i) continuously charging a feed stream of styrene, acrylonitrile and said ethylenically unsaturated monomeric ester and a ketone solvent having dissolved therein from 3 to 20 % by weight of a butadiene rubber to a stirred first reactor, wherein the polymerization reaction is carried out at a temperature in the range of from 65° C to 95° C and wherein the amount of copolymerizable ester is in the range of from 5 % to 15 % by weight based on the total weight of the monomers being charged; and wherein the polymerization mixture is continually advanced to a subsequent second stirred reactor and wherein the first reactor operates at a polymer solids content of 15 to 40 % by weight;
(ii) simultaneously and continuously charging a separate feed stream comprising an ethylenically unsaturated nitrile monomer, a monoalkenylaromatic monomer and a ketone solvent to the second stirred reactor wherein the polymerization reaction is carried out at a temperature in the range of from 147 to 166°C,
(iii) continuously polymerizing the mixture in the first and second reactors, while maintaining stirring such that the polymerizing mixture has a substantially uniform composition and such that the rubber is dispersed in the polymerizing mixture;
(iv) continuously separating the acrylonitrile-butadiene rubber-styrene-ester polymer from the polymerizing mixture in the second reactor,
characterized in that methyl propyl ketone is used as the solvent.

### DESCRIPTION OF THE DRAWINGS

Figure I is a schematic of one embodiment of the apparatus and process used in the present invention. Figure I shows two polymerization reaction vessels R1 and R2 and the devolatilizer DV and a particular polymer formulation and reaction conditions. Additional polymerization reaction vessels may be used as well as variations in the charge and reaction conditions.

Figure II - Curve A (solid line) shows the bimodal distribution of rubber particles obtained with the present process. Curve B (dotted line) shows a bimodal ABS composition of the prior art where the bimodal distribution was obtained by blending a small and a large rubber particle size ABS.

Figures IIIA and B, which are photomicrographs of a prior art ABS, show the rubber particle morphology of an ABS composition made by a suspension process at three different magnifications: 10,000 and 22,000 times in IIIA and IIIB respectively. Substantially all of the rubber particles have occluded SAN which show up as the lighter spheroids within the darker rubber particles.

Figures IVA and B, which are photomicrographs of a prior art ABS made by a continuous mass process, show that a major amount of the rubber particles have occluded styrene acrylonitrile (SAN) copolymer. In a minor amount of the particles, especially the larger particles, the occluded SAN appears not as discrete spheroids but as an interpenetrating network.

Figures VA and B, which are photomicrographs of the ABSE of the present invention, show that a major amount of the smaller rubber particles (i.e. less than about 0.6 microns (µ) are free of occlusion and that in a major amount of the larger particles (i.e. greater than about 0.6 microns (µ), the occluded styrene acrylonitrile ester polymer (SANE) is not in the form of discrete spheroids. Rather the occluded SANE is in the form of an interpenetrating network. This unique morphology is the result of the processes of the present invention.

This is in sharp contrast to the grafted rubber particles of the prior art where the small and large rubber particles contain occlusions of the grafted polymer, e.g. SAN in the form of discrete spheroid particles as is shown in Figure III.

### GRAFT SUPERSTRATE AND MATRIX COPOLYMER

The monomers grafted on the rubber substrate, sometimes referred to herein as the "graft superstrate", and the ungrafted matrix copolymers of the ABSE compositions comprise styrene, acrylonitrile and ethylenically unsaturated monomeric esters which are a whole or partial ester of a mono or dicarboxylic acid. Such monomers comprise at least 50.0 percent by weight and preferably at least 75.0 percent by weight of the combined weight of graft superstrate and matrix copolymer. Most desirably, such monomers comprise at least 90.0 percent by weight of the graft superstrate and matrix copolymer. Minor amounts, i.e., less than 5.0 percent by weight of other components such as chain transfer agents, modifiers, etc., may be included.

Exemplary of monomeric esters are dialkyl fumarates, dialkyl maleates and dialkyl itaconates, wherein the alkyl group contains from 2 to 6 carbon atoms, vinyl acetate, vinyl propionate and the like (hereinafter referred to as the "ester monomer").

Optionally, minor amounts of other copolymerizable monomers such as methyl methacrylate, butyl acrylate, methyl acrylate, and 2-ethyl hexyl acrylate may be used in the graft superstrate and matrix copolymer provided that they do not adversely affect the balance of properties of the resulting ABSE compositions (hereinafter referred to as the "other monomer").

The polymerizable monomer mixtures forming graft superstrate and matrix copolymer contain at least 20 percent by weight of styrene and preferably at least 50 percent by weight thereof. They also contain at least 5 percent by weight of the acrylonitrile and preferably at least 10 percent by weight thereof. In addition, the monomer mixtures contain at least 5 percent by weight and preferably about 10 percent by weight of the ester monomer.

From the standpoint of highly advantageous commercial practice, the monomer formulations contain 20 to 85 percent, and preferably 45 to 80 percent, by weight of styrene and 65 to 10 percent, and preferably 40 to 15 percent, by weight of the acrylonitrile, and 5 to 15 percent by weight of the ester monomer.

The amount of rubber used is such that the final ABSE polymer contains 10 to 25% by weight of rubber based on the total polymer weight. Also it is understood that when the ester monomer is used up during polymerization, the polymer being formed will be a copolymer of styrene acrylonitrile and any optional other monomers. In reporting matrix molecular weight the value given is for the matrix which comprises SANE and SAN.

### RUBBER SUBSTRATE

The rubbers are butadiene rubbers.

Preferred butadiene homopolymers are those having a weight-average molecular weight in the range of 175,000 to 225,000, solutions of which are essentially gel free, i.e. free of undissolved rubber. Butadiene rubber with higher molecular weights have a tendency to yield larger rubber particles in the final products, which is undesirable for high gloss, while those with lower molecular weights are more difficult to handle or process.

### GRAFT POLYMERIZATION PROCESS

The rubber graft copolymers are prepared by polymerizing monomers of the matrix copolymer in the presence of the preformed rubber substrate. In such graft polymerization reactions, the preformed rubber substrate is dissolved in the monomers which are polymerized so that at least a portion of the monomers are combined chemically or grafted onto the rubber substrate. Depending upon the ratio of monomers to rubber substrate and polymerization conditions, it is possible to produce both the desired degree of grafting of the monomers onto the rubber substrate and, at the same time, polymerization of the monomer to form ungrafted copolymer.

Although the amount of superstrate grafted onto the rubber substrate may vary from as little as 10 parts by weight per 100 parts of substrate to as much as 250 parts per 100 parts, and even higher, the preferred rubber graft copolymers have a superstratesubstrate ratio of about 30-200:100 and most desirably about 70-150:100. With graft ratios above 30:100, a highly desirable degree of improvement in various properties generally is obtained.

### CONTINUOUS MASS POLYMERIZATION PROCESS

In the preferred continuous mass polymerization process, the rubber substrate is initially dissolved in the monomers and solvent and this solution, the initiator and any other optional components are continuously charged to a stirred reactor which provides a continuous polymerization zone. Preferably substantially all of the ester monomer, e.g. dibutyl fumarate, is charged initially as this monomer influences the formation of the rubber particles and the preservation of the integrity of these particles during the polymerization reaction. Part of the styrenic, nitrile and optionally other monomers are subsequently added to the polymerizing mass.

A plurality of reactors may be employed in series with each operating in a continuous mode in which the polymerization is advanced to the required conversion. Alternately a single reactor may be used provided that the polymerizing mass moves through the reactor allowing continuous introduction of monomers and other materials into the polymerizing mass. After polymerization has progressed to the desired conversion level, the residual monomer is stripped from the polymer. The devolatilizing operation, which is the same whether one or a series of polymerization reactors is employed, is conventionally done in a separate device such as a wiped film or falling strand devolatilizer.

The polymerization may be initiated by any free radical generating initiator that promotes grafting and is activated at the contemplated reaction temperatures. Suitable initiators comprise the conventional monomer-soluble peroxy and perazo compounds. Exemplary initiators are t-butyl-peroxyneodecanoate, t-butyl-peroxy-2-ethylhexanoate, l-t-butylazo-1-cyanocyclohexane, ditert-butyl peroxide, benzoyl peroxide, lauroyl peroxide, oleyl peroxide, toluyl peroxide, di-tertbutyl diperphthalate, tert-butyl peracetate, tert-butyl perbenzoate, dicumyl peroxide, tert-butyl peroxide isopropyl carbonate. 2,5-dimethyl-2,5 di(tert-butylperoxy)hexane, 2-5,dimethyl-2,5-di(tert-butyl peroxy)-hexyne-3,tert-butyl hydroperoxide, cumene hydroperoxide, p-methane hydroperoxide, cyclopentane hydroperoxide, diisopropylbenzene hydroperoxide, p-tert-butylcumene hydroperoxide, pentane hydroperoxide, 2,5-dimethylhexane-2,5-dihydroperoxide, as well as percarbonate compounds such as t-butyl-2-ethylhexyl-monoperoxycarbonate, etc. and mixtures thereof.

The initiator is generally included within the range of 0.001 to 1.0 percent by weight, and preferably on the order of 0.005 to 0.5 percent by weight of the polymerizable material, depending upon the monomers and the desired polymerization cycle.

It is often desirable to incorporate molecular weight regulators such as mercaptans, halides and terpenes in relatively small percentages by weight, on the order of 0.001 to 1.0% by weight of the polymerizable material. In addition, it may be desirable to include relatively small amounts of antioxidants or stabilizers such as the conventional alkylated phenols. Alternatively, these may be added during or after polymerization. The formulation may also contain other additives such as plasticizers, lubricants, colorants and non-reactive preformed polymeric materials which are suitable or dispersible therein.

The solvent, MPK serves many functions including reducing the rate of polymerization, reducing polymer molecular weight and regulating the rubber particle size and rubber phase morphology.

Preferably part of the diluent is introduced initially with the rubber in monomer solution either as an added component or by use of a rubber which is already dissolved in a suitable solvent. The remaining portion of diluent is added subsequently to one or more of the reactors.

In the preferred process, part of the styrenic and nitrile monomers and substantially all of the ester monomer and dissolved rubber are continuously charged to a well-mixed polymerization reaction zone. Initially the copolymer being formed from the monomer composition is dissolved in the monomers. The polymerized mass is continuously removed from the initial reaction zone and replenished by charging at a rate about equal to the rate at which the monomers are polymerized and advanced. The mixture of withdrawn polymer and monomer is passed through one or more devolatilizers of the type referred to above to separate out the polymer which may then be pelletized in conventional apparatus while the separated monomer is condensed and returned to the reaction zone. Chain transfer agents and liquid solvents, initiators, and other additives of the type described above with respect to the continuous mass graft polymerization process may be charged continuously with the monomer composition or separately to the reaction zone.

The ABSE polymers produced by the continuous mass processes of the present invention are characterized by the following balance of properties:
Gloss - at least 50% and preferably at least about 70%.
Izod Impact - at least 120 J/M and preferably at least about 250 J/M.
IDI Impact - of at least 15 J and preferably greater than 23 J.
Tensile - a tensile strength of at least 36 MPa and preferably at least 42 MPa.
Flow - a melt viscosity (KPa-S) of less than 0.45 and preferably less than 0.25.

In addition the ABSE polymers have a rubber phase morphology characterized by a bimodal distribution where 10 to 30% of the rubber particles have a Dw of from about 0.6 to about 1.0 micron (µ) and 70 to 90% of the rubber particles have a Dw of from about 0.2 to 0.6 microns and wherein the smaller particles are substantially free of occluded matrix polymers and wherein a majority of the large particles have a low level of occluded matrix polymer as represented by the structure of the large particles in Figure VA and B.

### DESCRIPTION OF PREFERRED EMBODIMENTS

In the following examples the following explanations apply:

Apparatus: The polymerization was carried out in a two reactor system wherein the first reactor is designated R1 and the second reactor as R2. Each reactor is equipped with conventional stirring, temperature control and sampling means well known to those skilled in the art. A devolatilizer (DV) of the wiped film type is used after R2 to remove unreacted monomers and solvent from the polymer. A conventional pelletizer is used to pelletize the polymer.

Polymerization Process: One part of a polybutadiene rubber, sufficient for a thirty-four hours continuous run at approximately 1 lb./hour is cut into small cubes and then mixed with four parts of styrene monomer with agitation for at least twenty-four hours until the rubber is completely dissolved. To this rubber solution is then added the required balance of styrene, acrylonitrile, dibutyl fumarate and solvent (methyl ethyl ketone or methyl propyl ketone) and agitation is continued for two hours. Initiator, chain-transfer agent and other additives are then weighed and charged with the delayed monomer feeds about two hours before the feeds are poured into the load-cells connected with the pumps feeding the reactors.

During start-up, the reactors are first filled with a start-up solution typically as given below:

| | |
|---|---|
| Styrene | 2.5 kg |
| Acrylonitrile | 1.0 kg |
| Methyl ethyl ketone | 1.0 kg |
| T-butyl peroctoate | 1.5 gram |

The load-cells are then emptied by vacuum and then charged with their respective feeds. The start-up solutions in the reactors are then heated up under agitation. When the temperature approaches the set values, the feed pumps are started at half the target flow rates and gradually increased to full rate as the solids build up in the reactors with time. If needed, additives, such as stabilizers, plasticizers, etc. are added to the ABSE between R2 and DV via a pump.

The course of the polymerization is monitored by continuously recording and displaying flow-rates to the reactors, reactor temperatures, pressure, agitation rate and amperage, and by sampling and determining, off-line, the polymer solids formed in the reactor syrups at regular one-hour intervals. Rubber particle size and size distribution are also measured off-line. In general, it took about twenty hours for a run to reach steady state conditions. Polymerization was typically allowed to continue under steady state operation for three to four more hours such that enough material could be collected for property/performance evaluations as well as structure/ morphology characterization.

Product compositions and properties were determined using the following:

Rubber level was determined from a material balance (MB) of input feeds and output products.

Rubber particle size distribution was measured in a disc centrifuge operating at 2250 RPM and containing a 50/50 DMF/acetone mixture. Approximately 0.2 mg of particles were injected as a dispersion in 2 mg particle/ml of acetone. The results are reported as weight average particle size diameter (Dw) in microns (µ).

Rubber particle morphology was examined on OsO₄ stained cyromicrotomed thin sections using a Philips CM12 transmission electron microscope.

Gel level was measured by dispersing one gram of polymer in 5 grams of MEK and measuring the fraction which was recovered after centrifuging for four hours at 22,500 RPM in a Beckman Model L ultracentrifuge. The difference between the gel level and rubber level was the graft and occluded SANE copolymers.

Swelling index was measured by swelling the recovered gel from above in THF for five hours, decanting and measuring the soluble portion and then determining the swollen weight to dry weight of the non-soluble polymer.

Acrylonitrile level was measured using elemental carbon-hydrogen-nitrogen (CHN) analysis.

Dibutyl fumarate level was measured using elemental oxygen analysis.

Matrix molecular weight (Mv) was measured using conventional intrinsic viscosity and gel permeation chromatography techniques. Results are reported as viscosity average molecular weight x 10⁻³ (e.g. a value of 189,000 is reported as Mv = 189).

Oligomers level was determined using gas chromatograph techniques.

Glass transition temperature, Tg was determined by DSC on about 20 mg sample of the methanol (MeOH) precipitated matrix polymer from the ABS samples.

Vicat Softening Temperature: ASTM D-1525.

Inverted Dart Impact (IDI): a dart with a hemispherical head of 0.013 meters diameter was used against which the specimen was driven at a constant speed of 1.86 meters/sec. The impact values are reported in Joules (J).

Notched Izod Impact (J/m): ASTM D-256-70, results reported in Joules/meter notch.

Tensile Strength at Yield (MPa): ASTM D-638-61T results reported in terms of megapascals (MPa).

Apparent Viscosity (KPa-S): A capillary Extrusion Rheometer at 204°C is used. The viscosity at specific shear rates was calculated using the technique described in "Automatic Capillary Rheometer, Instruction Manual for Model 3501-H" published by Monsanto Research Corp. (April 1972 edition).

Gloss-Percent Specular Reflectance (Rₛ): HUNTERLAB DORI-GON METER MODEL D47R-6 from Hunter Associates Laboratory at Reston, VA; sample molded in 2.5 seconds at 232°C.

| ABBREVIATIONS USED | |
|---|---|
| AN | acrylonitrile |
| CTA | chain transfer agent |
| DBF | dibutyl fumarate |
| DMF | dimethyl formamide |
| DSC | differential scanning calorimeter |
| DV | devolatilizer |
| Dw | rubber particle size expressed as weight average diameter in microns (p) |
| Diene 35 | a butadiene homopolymer rubber sold by Firestone |
| E | ester monomer |
| IOT | iso-octyl thioglycolate |
| Irganox 1076 | an antioxidant sold by Ciba Geigy |
| KPa-S | kilopascals-second |
| MB | material balance |
| MEK | methyl ethyl ketone |
| MPK | methyl propyl ketone |
| OsO₄ | osmium oxide |
| R1/R2 | followed by name of material or amounts indicates type of material or amounts in R1 and R2 |
| SAN | poly(styrene acrylonitrile) |
| SANE | poly(styrene acrylonitrile ester) |
| THF | tetrahydrofuran |
| Product | is the polymeric product obtained after devolatilizer (DV) operation, i.e. the final ABSE product. |
| | |
| R1 | first polymerization reactor |
| R2 | second polymerization reactor |
| S | styrene |
| SI | swelling index |
| Steron 721A | a 90/10 butadiene/styrene block copolymer rubber sold by Firestone |
| TBPD | t-butyl peroxyneodecanoate |
| tDM | tertiary dodecyl mercaptan |
| TBEC | t-butyl ethyl hexyl mono peroxy carbonate |

Only Examples 1, 4A, 5A and 5B are within the scope of the claims.

### EXAMPLE 1

This Example is a comparison of a prior art process (Control) with a process of the present invention (Example 1).

| Feeds | Control | Example 1 |
|---|---|---|
| | R1/R2 | R1/R2 |
| Solvent Type | MEK/MEK | MPK/MPK |
| Rubber Type | Stereon 721A | Diene 35 |
| Initiator Type | TBPD/O | TBPD/TBEC |
| CTA Type | tDM/tDM | O/IOT |
| % Rubber | 7.3/0 | 8.3/0 |
| % Styrene | 43.6/13.7 | 43.7/1.0 |
| % AN | 14/4.8 | 9.5/10.0 |
| % DBF | 0/0 | 6.0/0 |
| % Solvent | 16.3/0 | 11.9/8.2 |
| % Initiator | 0.033/0 | 0.028/0.062 |
| % CTA | 0.03/0.1 | 0.0/0.082 |
| % Mineral Oil | 0/0 | 0.0/1.15 |
| % Irganox 1076 | 0/0.055 | 0.0/0.087 |
| Subtotal | 81.3/18.7 | 79.4/20.6 |

| Conditions | R1/R2/DV | R1/R2/DV |
|---|---|---|
| Temperature (C) | 85/165/230 | 81/147/245 |
| Residence Time (hrs) | 2.0/0.81 | 2.03/1.667 |
| % Solids | 28.3/56.1 | 25.6/63 |
| R1 SANE/Rubber Ratio | 2.13 | 1.44 |

The properties of the polymeric compositions obtained after the R1 reaction and after the DV (i.e. the final product) are listed below:

| Structure R1/DV | Control | Example 1 |
|---|---|---|
| % Rubber | 32/13 | 40.9/13.2 |
| % Graft | 50/100 | 48.0/78.7 |
| Dw | 0.6/0.6 | -/0.519 |
| Mv matrix | 189/105 | 206/111 |
| | | |

| Product Properties | | |
|---|---|---|
| IDI, Joules | 18.6 | 23.9 |
| Izod, J/m | 190 | 140.6 |
| Tensile at Yield, MPA | 43.7 | 41.94 |
| Viscosity, KPa-S | 0.40 | 0.26 |
| @1000 sec⁻¹ | | |
| Gloss, % | 10.6 | 69.3 |

Many inventive modifications are made to the prior art processes, which in combination provide the improved balance of performance properties in the polymers prepared by the processes of the present invention. These modifications include (1) the use of a combination of lower temperature in R1 and R2, lower solvent level in R1 and the use of additional solvent in R2, lower initiator level in R1 and higher in R2 to maintain an optimum balance of grafting, molecular weight and polymer/rubber ratio control; (2) the use of a solvent such as MPK in both R1 and R2 to get smaller rubber particles with a narrower particle size distribution; amd (3) the use of solid polybutadiene homopolymer rubber (Diene 35) in combination with a high level of an ester such as DBF (about 10% by weight based on total monomer feed to R1).

It is believed that DBF levels of from 5 to 15% by weight, based on the total weight of monomers in R1, make the graft macromolecules a better solvent for the dispersion medium (i.e. styrene-acrylonitriledibutyl fumarate copolymer in melt-state) and thus better stabilizers for the rubber dispersion in the final products at elevated temperature during injection molding, which results in higher molded gloss. When a high level of DBF is used, not only is the composition of the polymer made in the reactors changed, but also the composition of the dispersion medium since the dispersion and stabilization of the dispersed rubber phase is mainly determined by how the graft macromolecules thermodynamically interact with the continuous medium, which at low solids is mainly controlled by the nature of the small molecules (i.e. unreacted monomers and solvent). The presence of DBF groups (in the graft and the continuous medium) have apparently enhanced the solvency interaction between the surface graft and the continuous phase, leading to better rubber dispersion, and resulting in formation of smaller and more stable rubber particles in the reactor. However, applicants are not to be bound by this theory.

With respect to Example 1 formulation and process conditions in the second reactor (R2), no additional DBF is charged to R2 in order to minimize the DBF level in the copolymer made in R2; the R2 feed has high acrylonitrile and solvent level and low styrene level to make copolymer with higher AN level and to convert the continuous medium to a poor solvent for the polybutadiene rubber and a very good solvent for the graft and matrix macromolecules. Under these conditions, internal grafting in the dispersed rubber phase is minimized as the monomers are predominantly partitioned in the continuous phase and surface grafting of SANE copolymer onto the rubber particles is enhanced, which is desirable for stabilizing the rubber dispersion in R2 and DV. This gives rise to the morphology shown in Figure V where the smaller rubber particles are substantially free of occlusions and where the larger rubber particles contain the SANE copolymer substantially as an interpenetrating network with a minor amount of spheroidal occlusions. Other significant changes made versus the prior art process are: (1) lower polymerization temperature in R2 to reduce oligomer formation and to increase the Tg of the matrix polymer; (2) the use of an initiator (TBEC) in R2 to control the conversion; and (3) the use of IOT as chain transfer agent in R2 but not in R1 to control the molecular weight.

### EXAMPLE 2

This Example shows the advantage of the use of a butadiene homopolymer (Diene 35) of medium molecular weight (Mw = about 200,0000) over butadiene/styrene block rubber copolymer (Stereon 721A) having a molecular weight of Mw = about 185,000. The polymerization process details and properties of the resulting ABSE are set forth below.

| Feeds | Example 2A | Example 2B |
|---|---|---|
| | R1/R2 | R1/R2 |
| Solvent Type | MEK/MEK | MEK/MEK |
| Rubber Type | Stereon 721A | Diene 35 |
| Initiator Type | TBPD/O | TBPD/O |
| % Rubber | 8.4/0 | 8.4/0 |
| % Styrene | 42.8/3 | 42.8/3 |
| % AN | 8.6/13.1 | 8.6/13.1 |
| % DBF | 6./0 | 6/0 |
| % Solvent | 14.4/3.6 | 14.4/3.6 |
| % Initiator | 0.029/0 | .029/0.000 |
| % Irganox 1076 | 0/0.08 | 0/0.08 |
| Subtotal | 80.2/19.8 | 80.2/19.8 |
| | | |

| Conditions | R1/R2/DV | R1/R2/DV |
|---|---|---|
| Temperature (°C) | 83/160/231 | 83/166/231 |
| Residence Time (hrs.) | 1.96/1.57 | 1.96/1.57 |
| % Solids | 24/55 | 23.5/56 |
| R1 SANE/Rubber Ratio | 1.29 | 1.24 |

| COMPARISON OF EXAMPLES 2A AND 2B | | |
|---|---|---|
| | Example 2A | Example 2B |
| Rubber Type | Stereon 721A | Diene 35 |
| % Rubber | 15.3 | 15.1 |
| % Graft | 52 | 63.9 |
| Dw | 0.37 | 0.63 |
| Mv Matrix | 101 | 87 |
| | | |

| Product Properties | | |
|---|---|---|
| IDI, Joules | 23 | 23 |
| Izod, Joules/m | 288 | 179 |
| Tensile Strength at Yield, MPA | 41.7 | 36.7 |
| Viscosity, KPA-S @1000 sec-1 | 0.37 | 0.35 |
| Gloss | 16.8 | 41.5 |

The results show that Diene 35 provides ABSE with larger rubber particles. Despite the larger rubber particle size which the prior art teaches to reduce gloss, the Diene-35 based sample unexpectedly exhibited much higher gloss. Sample 2B with an average rubber particle size of 0.63 p had a molded gloss of 41.5, which is very high gloss for that rubber particle size.

### EXAMPLE 3

This Example shows the effect of using a lower level of solvent in R1 and a lower R1 temperature to give a higher Mv (SANE) for the R1 polymer.

The polymerization process of Example 2B and Diene 35 rubber is used here except that the amount of solvent used in R1 is reduced from 17.9% to 14.9% based on the total weight of the reaction mixture and 0.183% of IOT is added in R2 resulting in a lower molecular weight for the SANE. The details and results are set forth below:

| COMPARISON OF R1 CONDITIONS/PRODUCTS | | |
|---|---|---|
| | Example 3A | Example 3B |
| R1 % Solvent | 17.9 | 14.9 |
| R1 Temperature, °C | 83 | 79 |
| % Rubber | 15.1 | 14.9 |
| % Graft | 63.9 | 58 |
| Dw | 0.63 | 0.52 |
| R1 Mv (SANE) | 138 | 186 |
| Product Mv (SANE/SAN) | 87 | 60 |
| IDI, Joules | 23 | 0.3 |
| Izod, Joules/m | 179 | 3.8 |
| Tensile Strength | 36.7 | 29.4 |
| at Yield, MPA | | |
| Viscosity, KPA-S @1000 sec⁻¹ | 0.35 | 0.17 |
| | | |
| Gloss | 41.5 | 65.3 |

Lower solvent levels increase the rate of polymerization due to higher monomer concentration in R1 and thereby make higher molecular weight at a lower temperature. Significantly higher molecular weight was obtained in R1 in Example 3B (186 Mv) resulting in smaller rubber particle size in the products and glossier surface in the molded chips. However, the impact strength of the above product was very low due to excessively low matrix molecular weight in the product. This shows the need to select the critical conditions required to obtain the desired balance of properties.

### EXAMPLE 4

This example shows the effect of solvent type on the properties of the resulting ABSE. The process of Example 2B and Diene 35 rubber is used here. The details and results are set forth below.

| THE EFFECT OF SOLVENT TYPE | | | |
|---|---|---|---|
| Example | 4A | 4B | 4C |
| Solvent Type (R1/R2) | MPK/MPK | MEK/Hexene | MEK/MEK |
| Dw | 0.5 | 0.57 | 0.56 |
| Mv matrix | 125 | 122 | 98 |
| IDI, Joules/m | 22.7 | 23 | 20 |
| Izod, Joules/m | 288.6 | 162.8 | 129.4 |
| Tensile Strength at Yield, MPA | 36 | 33.9 | 34.4 |
| Viscosity, KPA-S | 0.36 | 0.34 | 0.36 |
| Gloss | 75 | 66 | 54 |

The results show that Example 4B with a MEK/hexene mixture as solvent yielded a product with larger rubber particle size and slightly lower matrix molecular weight, gloss, Izod impact and tensile than 4A. Example 4C with MEK as solvent also yielded a product with larger rubber size, lower Izod impact strength and lower gloss than 4A. The use of MPK as solvent had the desirable effect of making ABS with smaller rubber particles, glossier molded surface appearance and higher Izod impact.

### EXAMPLE 5

This Example shows the effect of using a lower R2 temperature and TBEC in R2 as an initiator. The details and results are set forth below. Diene 35 is the rubber used; the chain transfer agent is IOT and the solvent is MPK in both R1 and R2.

| THE EFFECT OF LOWER R2 TEMPERATURE WITH TBEC AS INITIATOR | | | |
|---|---|---|---|
| Example | 5A | 5B | 5C |
| Feed | R1/R2 | R1/R2 | R1/R2 |
| Initiator Type | TBPD | TBPD/TBEC | TBPD/TBEC |
| % DBF | 5.96/0 | 5.96/0 | 5.72/0 |
| % Rubber | 8.3/0 | 8.3/0 | 8.0/0 |
| % Styrene | 43.8/1.0 | 43.7/1.0 | 42.04/1.2 |
| % AN | 9.5/10.1 | 9.5/10.0 | 9.1/11.5 |
| % Solvent | 11.9/8.2 | 11.9/8.2 | 11.4/9.5 |
| % Initiator | 0.028/0 | 0.028/0.062 | 0.027/0.142 |
| % CTA | 0/0 | 0/0.082 | 0/0.095 |
| % Mineral Oil | 0/1.12 | 0/1.15 | 0/1.15 |
| % Irganox 1076 | 0/0.083 | 0/0.087 | 0/0.087 |
| Subtotal | 79.5/20.5 | 79.4/20.6 | 76.3/23.7 |
| | | | |

| Conditions | R1/R2/DV | R1/R2/DV | R1/R2/DV |
|---|---|---|---|
| Temperature (°C) | 80/166/226 | 81/147/245 | 80/126/245 |
| Residence Time (hrs.) (R1/R2) | 1.98/1.56 | 2.03/1.66 | 2.04/1.62 |
| % Solids (R1/R2) | 27/59 | 25.6/63 | 25.8/61.5 |
| STRUCTURE AND COMPOSITION for R1 and R2 when two values are given, single value is for final product. | | | |
| % DBF | 9.6 | 8.6 | 7.8 |
| % AN by CHN | 16.6/24.5 | 17.3/25.3 | 17.3/25.2 |
| % Rubber by MB | 38.8/14.1 | 40.9/13.2 | 40.5/13.0 |
| % Gel Level | 58.7/25.3 | 60.5/23.6 | 60.5/24.3 |
| % Graft | 51.3/79.2 | 48.0/78.7 | 49.2/87.2 |
| SI | 19.9 | 11.5 | 11.2 |
| Dw | 0.498 | 0.519 | 0.600 |
| Mv matrix | 234/125 | 206/111 | 206/117 |
| % Oligomer | 0.87 | 0.15 | 0.12 |
| | | | |

| PRODUCT PROPERTIES | 5A | 5B | 5C |
|---|---|---|---|
| IDI, J/m | 22.7 | 23.9 | 23.7 |
| Izod, J/m | 288.6 | 140.6 | 171.3 |
| Tensile Strength at Yield, MPA | 36.02 | 41.94 | 41.34 |
| | | | |
| Apparent Viscosity | 0.36 | 0.26 | 0.28 |
| Vicat, °C | 95.6 | 102.7 | 105.2 |
| Gloss, 2.5 sec | 75 | 69.3 | 49.5 |

In Examples 5B and 5C, the R2 temperature was lowered and instead of operating R2 thermally at 166°C, TBEC was added in R2 as an initiator to control polyrate and conversion; to increase rubber phase cross-linking; and to control matrix molecular weight. The results confirmed that more rubber phase cross-linking was obtained as indicated by the sharp drop of swelling index (SI) of Examples 5B and 5C versus 5A. Tensile strength increased and Vicat softening temperature went up 7-9°C which was unexpected and surprising. This is because a relatively high level of dibutylfumarate (8.6% based on total S/AN/DBF level) was incorporated in the matrix as an internal plasticizer. It was expected that the heat distortion of these products would be lower than ABS without an ester component. Tests showed that Examples 5B and C had very low level of oligomers, much lower than the process used in 5A. Excluding the residue DBF, total oligomers level in the samples from 5B and C were only about 0.15%, which is 5 to 6 fold less than in the ABSE made by the 5A process. Most importantly, the product made from Example 5B demonstrated an excellent balance of all key properties: gloss, tensile, impact and flow. In addition the product had the morphology illustrated in Figure V.

In Example 5C, even lower R2 temperature was tested, and the results showed that larger rubber particles were obtained in the samples, causing lower gloss. This experiment demonstrated the importance of every step in the present process in preparing ABS products with high gloss. The key to obtaining a good balance of properties is to make small rubber particles in R1, and maintain the dispersion stability of these rubber particles in the SANE matrix in each of the R1, R2 and DV processing step. This is accomplished by the amounts of DBF, use of solvent in R1 and R2, the type of solvent used in R1 and R2, the conversion of monomer to polymer in R1 and the temperatures used in R1 and R2. In regard to R1 and R2, the temperatures used in R1 are in the range of 65 to 95°C and preferably 75 to 85°C; and the temperature used in R2 are in the range of 120 to 160°C and preferably 135 to 150°C.

In the preferred embodiments of the present invention, about 22% of the total polymer made is in R1 with about 78% being made in R2. About 60% of the graft polymer is made in R1 and about 40% is made in R2. About 17% of the matrix polymer is made in R1 and 83% is made in R2. Polymer composition was about 69/17/14 wt.% (S/AN/DBF) for the polymer made at R1 and about 66/27/7 wt.% (S/AN/DBF) for the polymer made at R2. Composition for the graft polymer in the final product was about 68/21/11 wt.% (S/AN/DBF) versus 66/25/9 wt.% (S/AN/DBF) for the matrix polymer.

However, it will be readily recognized that the starting materials and reaction conditions may be varied to vary the amounts of each polymer formed in each reactor. Preferably the above amounts will vary only ±20% of the values listed.

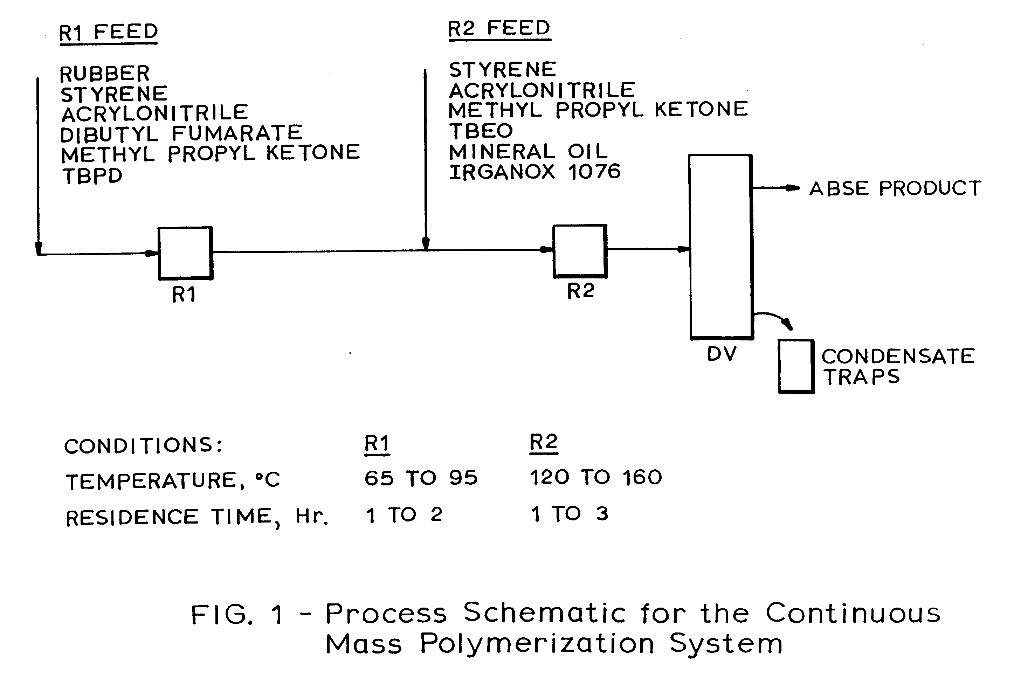

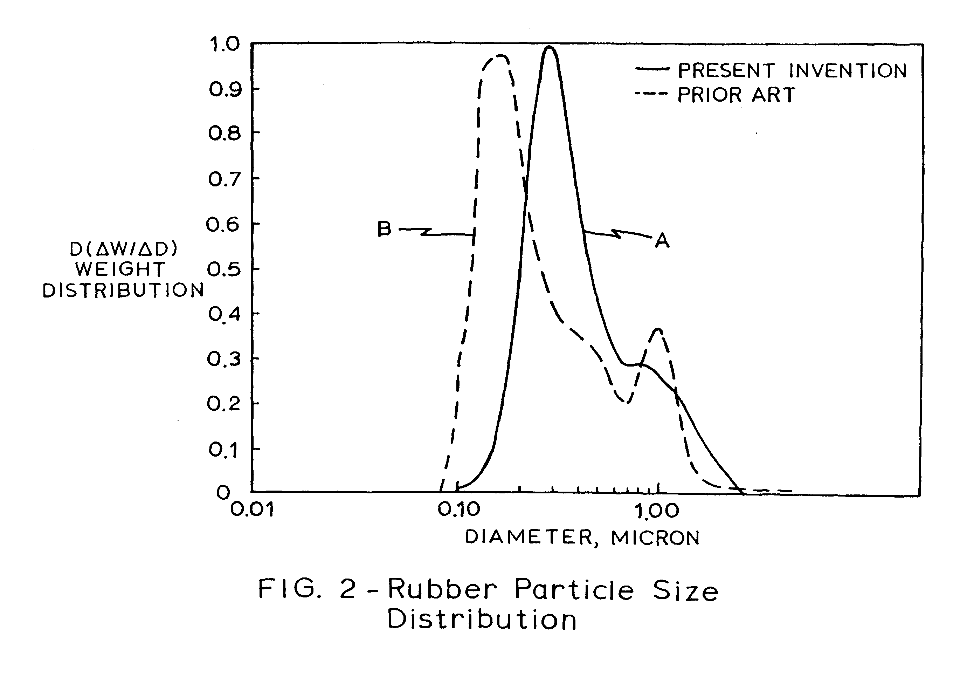

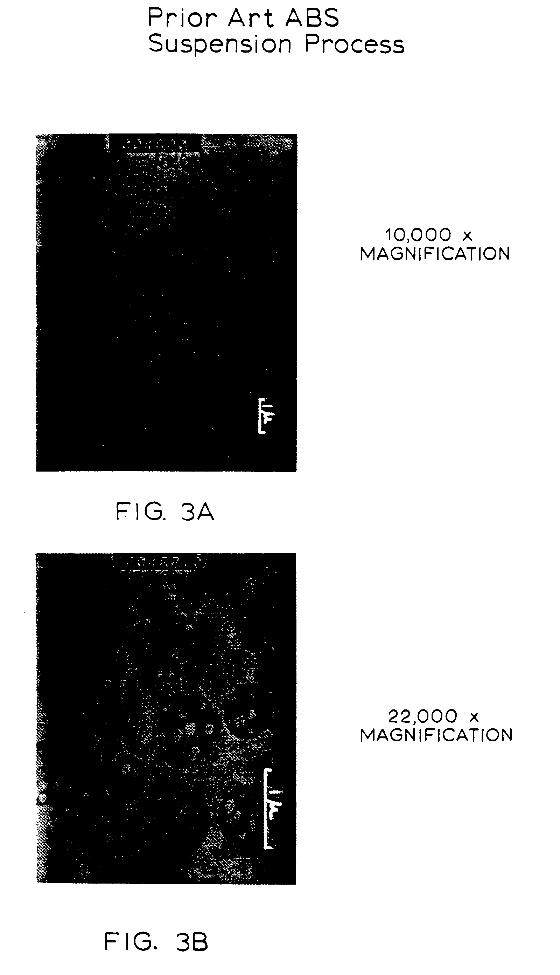

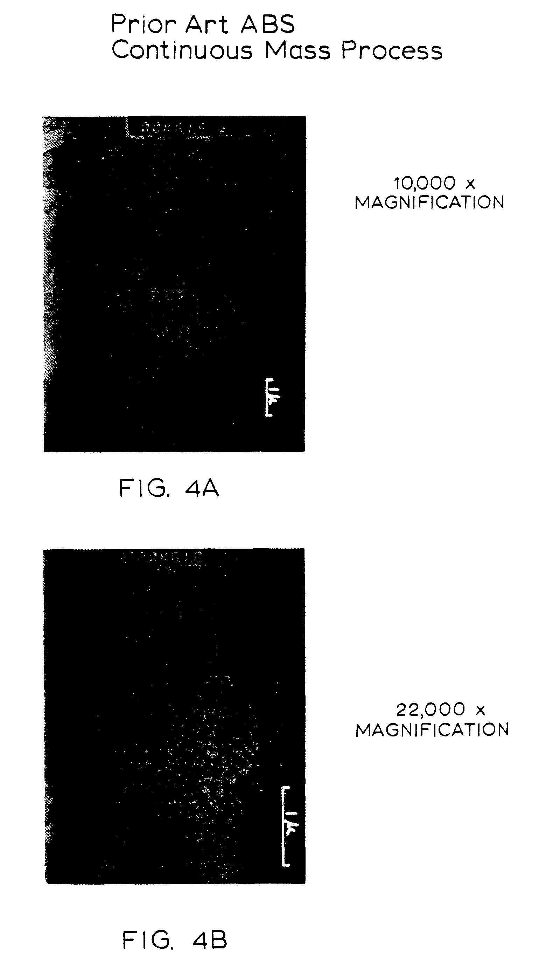

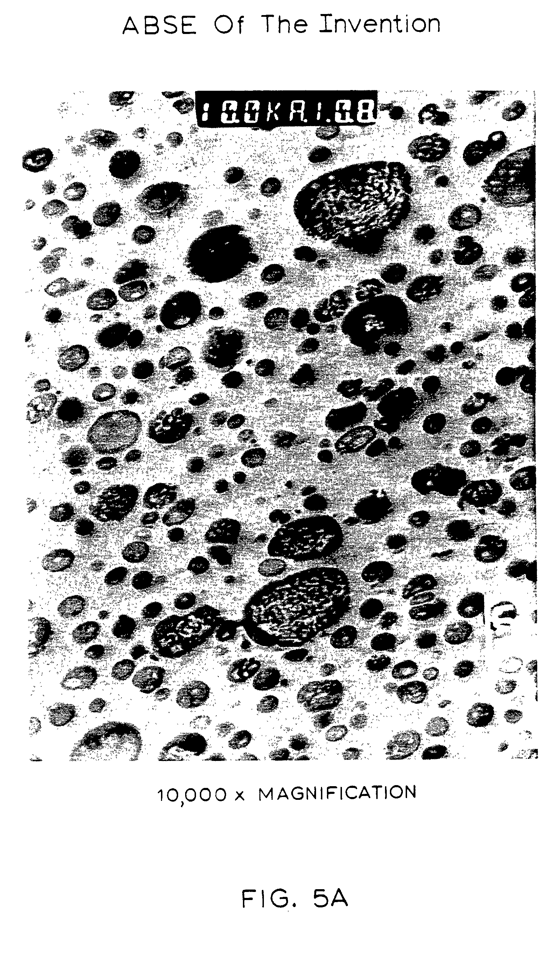

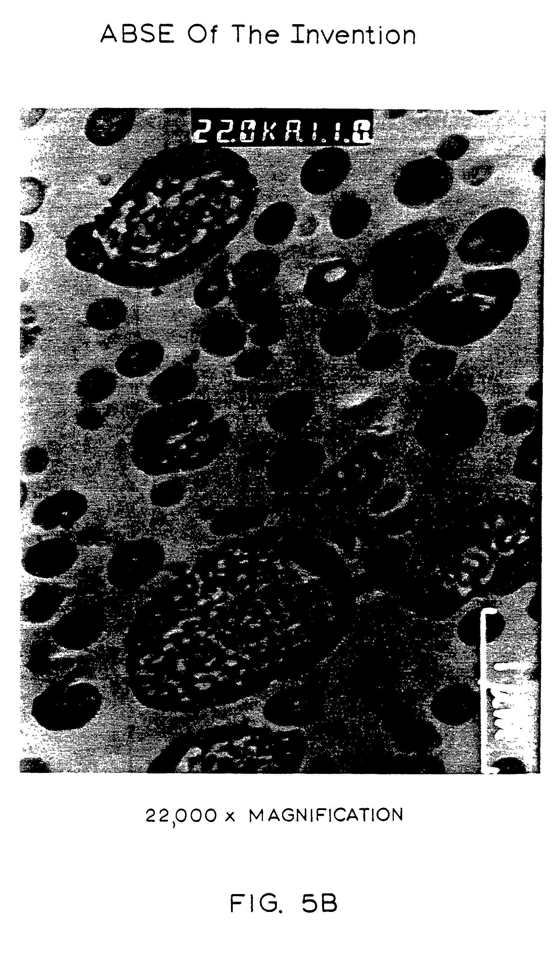

## Claims

1. A continuous mass polymerization process for preparing an acrylonitrile-butadiene rubber-styrene-ester polymer having a matrix phase comprising a copolymer of styrene, acrylonitrile and an ethylenically unsaturated monomeric ester which is a whole or partial - ester of a mono- or dicarboxylic acid and a dispersed phase comprising butadiene rubber particles having a grafted superstrate of a copolymer of styrene, acrylonitrile and said ester; wherein the polymer is **characterized by** having the following properties:
(a) a gloss level of at least 50%;
(b) an Izod impact of at least 120 JM;
(c) an IDI impact of at least 15 J;
(d) a tensile strength of at least 36 MPa;
(e) a melt viscosity (KPa-S) of less than 0.45;
wherein the rubber phase morphology is **characterized by** having a bimodal distribution of rubber particles wherein 10 to 30% of the rubber particles have a Dw of from 0.6 to 1.0 micrometers (µ) and 70 to 90% of the rubber particles have a Dw of from 0.2 to 0.6 micrometers and wherein the smaller particles are substantially free of occluded matrix polymers and wherein a majority of the large particles have a low level of occluded matrix polymer
and wherein in a major amount of the larger particles the occluded styrene acrylonitrile ester polymer is not in the form of discrete spheroids, but rather in the form of an interpenetrating network;
which process comprises:
(i) continuously charging a feed stream of styrene, acrylonitrile and said ethylenically unsaturated monomeric ester and a ketone solvent having dissolved therein from 3 to 20 % by weight of a butadiene rubber to a stirred first reactor, wherein the polymerization reaction is carried out at a temperature in the range of from 65° C to 95° C and wherein the amount of copolymerizable ester is in the range of from 5 % to 15 % by weight based on the total weight of the monomers being charged; and wherein the polymerization mixture is continually advanced to a subsequent second stirred reactor and wherein the first reactor operates at a polymer solids content of 15 to 40% by weight;
(ii) simultaneously and continuously charging a separate feed stream comprising an ethylenically unsaturated nitrile monomer, a monoalkenylaromatic monomer and a ketone solvent to the second stirred reactor wherein the polymerization reaction is carried out at a temperature in the range of from 147 to 166°C,
(iii) continuously polymerizing the mixture in the first and second reactors, while maintaining stirring such that the polymerizing mixture has a substantially uniform composition and such that the rubber is dispersed in the polymerizing mixture;
(iv) continuously separating the acrylonitrilebutadiene rubber-styrene-ester polymer from the polymerizing mixture in the second reactor,
**characterized in that** methyl propyl ketane is used as solvent.

2. A process according to claim 1 in which the rubber in (i) is added in sufficient quantities to provide a polymer in which the rubber provides from 10 to 25% of the weight of the polymer.

3. A process according to claim 1 in which the rubber used is a polybutadiene with a molecular weight in the range of from 175,000 to 225,000.

4. A process according to claim 1 in which the ester used is dibutyl fumarate.

5. A process according to claim 1 in which a first polymerization reactor is charged with a solution which comprises styrene, acrylonitrile, a butadiene rubber with a molecular weight in the range of 175,000 to 225,000, from 5 to 15% by weight of dibutyl fumarate based on the total weight of the monomers, methyl propyl ketone and a polymerization initiator, and wherein the polymerization is carried out until about 17 to 27% of the monomers are converted to polymer.

6. A process according to claim 1 in which separation of the ABSE polymer from the partially polymerized mixture is accomplished using a devolatilizer.

7. A process according to claim 1 in which the polymerizing mixture comprises up to 60% by weight, based on the monomer fed to the reactor, of a diluent.

8. A process according to claim 1 in which the polymerization mixture comprises an initiator selected from peroxycarbonates and peresters that promote grafting and which are activated at the reaction temperature which is between 70°C and 180°C.

9. A process according to claim 1 in which:
A. the rubber and monomers are fed to the first polymerization reactor with a polymer solids level of 20 to 35%, which is stirred to provide a substantially uniform composition said monomers and rubber being fed along with from 10 to 50% based on the monomers charged of a solvent, and an effective amount of an initiator selected from the group consisting of tert-butyl perbenzoate, tert-butyl peroxy (isopropyl) carbonate, tert-butyl peroctoate, tert-butyl peroxy isononoate and tert-butyl-2-ethylhexyl monoperoxy carbonate;
B. a first partially polymerized stream from said first reactor is further polymerized in second reactor operated continuously with a substantially uniform composition throughout to produce a second partially polymerized stream with up to 70% polymer solids content; and
C. an ABSE polymer is separated from the second partially polymerized stream using a devolatilizer.

10. The process of claim 1 wherein the separate feed stream of step (ii) is free of any substantial quantity of said ester monomer and rubber therein.

11. The process of claim 9 wherein the level of acrylonitrile in the feed to said mixture is sufficient to provide at least 20% by weight polymerized acrylonitrile monomer in the ABSE polymer.

12. An acrylonitrile-butadiene rubber-styrene-ester obtainable in accordance with the process of Claim 1.

13. A polymer as in Claim 12 wherein the monomeric ester is dibutylfumarate.

14. A polymer as in Claim 12 wherein the rubber phase is a grafted butadiene homopolymer or copolymer.

## Patentansprüche

1. Kontinuierliches Masse-Polymerisationsverfahren zur Herstellung eines Acrylnitril-Butadienkautschuk-Styrol-Ester-Polymers mit einer Matrixphase, umfassend ein Copolymer aus Styrol, Acrylnitril und einem ethylenisch ungesättigten, monomeren Ester, bei dem es sich um einen vollständigen oder partiellen Ester einer Mono- oder Dicarbonsäure handelt, und einer dispergierten Phase, umfassend Butadienkautschuk-Teilchen mit einer gepfropften Überschicht aus einem Copolymer aus Styrol, Acrylnitril und dem Ester, wobei das Polymer **dadurch gekennzeichnet ist, dass** es die folgenden Eigenschaften aufweist:
(a) einen Glanzgrad von wenigstens 50 %;
(b) eine Schlagzähigkeit nach Izod von wenigstens 120 J/m
(c) eine ICI-Schlagzähigkeit von wenigstens 15 J;
(d) eine Zugfestigkeit von wenigstens 36 MPa;
(e) eine Schmelzviskosität (kPa-S) von weniger als 0,45;
wobei die Morphologie der Kautschukphase **dadurch gekennzeichnet ist, dass** sie eine bimodale Verteilung von Kautschukteilchen aufweist, wobei 10 bis 30 % der Kautschukteilchen einen Dw von 0,6 bis 1,0 µm aufweisen und 70 bis 90 % der Kautschukteilchen einen Dw von 0,2 bis 0,6 µm aufweisen und wobei die kleineren Teilchen im wesentlichen frei von eingeschlossenen Matrixpolymeren sind und wobei die Mehrzahl der großen Teilchen einen niedrigen Gehalt an eingeschlossenem Matrixpolymer aufweist und wobei in einer größeren Menge der größeren Teilchen das eingeschlossene Styrol-Acrylnitril-Ester-Polymer nicht in Form von diskreten Sphäroiden, sondern statt dessen in Form eines interpenetrierenden Netzwerks vorliegt,
wobei das Verfahren:
(i) das kontinuierliche Einspeisen eines Aufgabestroms aus Styrol, Acrylnitril und dem ethylenisch ungesättigten, monomeren Ester und einem Keton-Lösungsmittel, in dem 3 bis 20 Gew.-% eines Butadienkautschuks gelöst sind, in einen ersten Rührreaktor, wobei die Polymerisationsreaktion bei einer Temperatur im Bereich von 65 °C bis 95 °C durchgeführt wird und wobei die Menge des copolymerisierbaren Esters im Bereich von 5 Gew.-% bis 15 Gew.-%, bezogen auf das Gesamtgewicht der eingespeisten Monomere, liegt und wobei die Polymerisationsmischung zu einem zweiten Rührreaktor kontinuierlich gefördert wird und wobei der erste Reaktor mit einem Gehalt an Polymerfeststoffen von 15 bis 40 Gew.-% betrieben wird;
(ii) das gleichzeitige und kontinuierliche Einspeisen eines getrennten Aufgabestroms, umfassend ein ethylenisch ungesättigtes Nitrilmonomer, ein monoalkenylaromatisches Monomer und ein Keton-Lösungsmittel, in den zweiten Rührreaktor, wobei die Polymerisationsreaktion bei einer Temperatur im Bereich von 147 bis 166 °C durchgeführt wird;
(iii) das kontinuierliche Polymerisieren der Mischung im ersten und im zweiten Reaktor, wobei das Rühren so beibehalten wird, dass die polymerisierende Mischung eine im wesentlichen gleichmäßige Zusammensetzung aufweist und so, dass der Kautschuk in der polymerisierenden Mischung dispergiert wird;
(iv) das kontinuierliche Abtrennen des Acrylnitril-Butadienkautschuk-Styrol-Ester-Polymers von der polymerisierenden Mischung im zweiten Reaktor umfasst, **dadurch gekennzeichnet, dass** Methylpropylketon als Lösungsmittel verwendet wird.

2. Verfahren nach Anspruch 1, wobei der Kautschuk in (i) in Mengen zugegeben wird, die ausreichend sind, um ein Polymer zu ergeben, in der Kautschuk 10 bis 25 % des Gewichts des Polymers ausmacht.

3. Verfahren nach Anspruch 1, wobei der eingesetzte Kautschuk ein Polybutadien mit einer Molmasse im Bereich von 175 000 bis 225 000 ist.

4. Verfahren nach Anspruch 1, wobei der eingesetzte Ester Dibutylfumarat ist.

5. Verfahren nach Anspruch 1, wobei ein erster Polymerisationsreaktor mit einer Lösung befüllt wird, die Styrol, Acrylnitril, einen Butadienkautschuk mit einer Molmasse im Bereich von 175 000 bis 225 000, 5 bis 15 Gew.-% Dibutylfumarat, bezogen auf das Gesamtgewicht der Monomere, Methylpropylketon und einen Polymerisationsinitiator umfasst und wobei die Polymerisation durchgeführt wird, bis etwa 17 bis 27 % der Monomere zu Polymer umgewandelt sind.

6. Verfahren nach Anspruch 1, wobei die Abtrennung des ABSE-Polymers von der teilweise polymerisierten Mischung durch eine Entgasungsvorrichtung bewerkstelligt wird.

7. Verfahren nach Anspruch 1, wobei die polymerisierende Mischung bis zu 60 Gew.-%, bezogen auf das in den Reaktor eingespeiste Monomer, eines Verdünnungsmittels umfasst.

8. Verfahren nach Anspruch 1, wobei die Polymerisationsmischung einen Initiator umfasst, der ausgewählt ist aus Peroxycarbonaten und Perestern, die das Pfropfen fördern und die bei der zwischen 70 °C und 180 °C liegenden Reaktionstemperatur aktiviert werden.

9. Verfahren nach Anspruch 1, wobei:
A. der Kautschuk und die Monomere mit einem Polymer-Feststoffgehalt von 20 bis 35 % in den ersten Polymerisationsreaktor eingespeist werden, der gerührt wird, um eine im wesentlichen gleichmäßige Zusammensetzung zu erhalten, wobei die Monomere und der Kautschuk zusammen mit 10 bis 50 %, bezogen auf die eingespeisten Monomere, eines Lösungsmittels und einer wirksamen Menge eines Initiators eingespeist werden, der aus der aus tert-Butylperbenzoat, tert-Butylperoxy(isopropyl)carbonat, tert-Butylperoctoat, tert-Butylperoxyisononoat und tert-Butyl-2-ethylhexylmonoperoxycarbonat bestehenden Gruppe ausgewählt ist;
B. ein erster teilweise polymerisierter Strom aus dem ersten Reaktor in dem zweiten, kontinuierlich betriebenen Reaktor durchgehend mit einer im wesentlichen gleichmäßigen Zusammensetzung weiter polymerisiert wird, wodurch ein zweiter teilweise polymerisierter Strom mit einem Polymer-Feststoffgehalt von bis zu 70 % erzeugt wird; und
C. ein ABSE-Polymer vom zweiten teilweise polymerisierten Strom mittels einer Entgasungsvorrichtung abgetrennt wird.

10. Verfahren nach Anspruch 1, wobei der getrennte Aufgabestrom von Schritt (ii) frei von jeder wesentlichen Menge des Estermonomers und des Kautschuks darin ist.

11. Verfahren nach Anspruch 9, wobei der Gehalt an Acrylnitril im Aufgabematerial zur Mischung ausreichend ist, um wenigstens 20 Gew.-% polymerisiertes Acrylnitril-Monomer im ABSE-Polymer zu ergeben.

12. Acrylnitril-Butadienkautschuk-Styrol-Ester, erhältlich gemäß dem Verfahren von Anspruch 1.

13. Polymer wie in Anspruch 12, wobei der monomere Ester Dibutylfumarat ist.

14. Polymer nach Anspruch 12, wobei die Kautschukphase ein gepfropftes Butadien-Homopolymer oder -copolymer ist.

## Revendications

1. Procédé continu de polymérisation en masse pour préparer un polymère acrylonitrile-caoutchouc de butadiène-styrène-ester ayant une phase de matrice comprenant un copolymère de styrène, d'acrylonitrile et d'un ester monomère insaturé éthyléniquement qui est un ester total ou partiel d'un acide mono ou dicarboxylique et une phase dispersée comprenant des particules de caoutchouc butadiène ayant une superstrate greffée d'un copolymère de styrène, d'acrylonitrile et dudit ester ; dans lequel le polymère est **caractérisé en ce qu'**il a les propriétés suivantes :
(a) un niveau de brillance d'au moins 50%,
(b) une résistance aux chocs Izod d'au moins 120 JM ;
(c) une résistance aux chocs IDI d'au moins 15 J ;
(d) une résistance à la traction d'au moins 36 MPa ;
(e) une viscosité à l'état fondu (KPa-S) de moins de 0,45 ;
dans lequel la morphologie de la phase caoutchouc est **caractérisée en ce qu'**elle a une distribution bi-modale de particules de caoutchouc dans lesquelles 10 à 30% de particules de caoutchouc ont une Dw de 0,6 à 1,0 micromètres (µ) et 70 à 90% de particules de caoutchouc ont une Dw de 0,2 à 0,6 micromètres et où les petites particules sont sensiblement exemptes de polymères de matrice occlus et où une majorité de grosses particules ont une quantité faible de polymère de matrice occlus et où dans une quantité principale des grosses particules le polymère styrèneacrylonitrile-ester occlus n'est pas sous forme de sphéroïdes discrets, mais plutôt sous forme d'un réseau interpénétrant; ce procédé comprenant les étapes consistant à :
(i) charger en continu un courant d'amenée de styrène, d'acrylonitrile et dudit ester monomère insaturé éthyléniquement et un solvant cétone ayant dissous dans celui-ci 3 à 20% en poids d'un caoutchouc de butadiène dans un premier réacteur agité, où la réaction de polymérisation est effectuée à une température dans la plage de 65°C à 95°C et où la quantité d'ester copolymérisable est dans la palge de 5% à 15% en poids rapporté au poids total des monomères chargés; et où le mélange de polymérisation est avancé en continu dans un second réacteur agité postérieur et où le premier réacteur fonctionne à une quantité de solides de polymère de 15 à 40% en poids ;
(ii) charger simultanément et en continu un courant d'amenée séparé comprenant un monomère nitrile insaturé éthyléniquement, un monomère aromatique monoalcényle et un solvant cétone dans le second réacteur agité où la réaction de polymérisation est effectuée à une température dans la plage de 147 à 166°C,
(iii) polymériser en continu le mélange dans le premier et second réacteurs, en maintenant l'agitation de manière que le mélange de polymérisation ait une composition sensiblement uniforme et de manière que le caoutchouc soit dispersé dans le mélange de polymérisation ;
(iv) séparer en continu le polymère acrylonitrile-caoutchouc de butadiène-styrène-ester du mélange de polymérisation dans le second réacteur, **caractérisé en ce qu'**on utilise la méthylpropylcétone comme solvant.

2. Procédé selon la revendication 1, dans lequel on ajoute le caoutchouc (1) dans des quantités suffisantes pour fournir un polymère dans lequel le caoutchouc constitue de 10 à 25% en poids du polymère.

3. Procédé selon la revendication 1, dans lequel le caoutchouc utilisé est un polybutadiène avec une masse moléculaire dans la plage de 175 000 à 225 000.

4. Procédé selon la revendication 1, dans leque l'ester utilsié est le fumarate de dibutyle.

5. Procédé selon la revendication 1, dans lequel on charge un premier réacteur de polymérisation avec une solution qui comprend le styrène, l'acrylonitrile, un caoutchouc de butadiène avec une masse moléculaire dans la plage de 175 000 à 225 000, de 5 à 15% en poids de fumarate de dibutyle, rapporté au poids total de monomères, la méthylpropylcétone et un initiateur de polymérisation, et où on effectue la polymérisation jusqu'à ce qu'environ 17 à 27% des monomères soient convertis en polymère.

6. Procédé selon la revendication 1, dans lequel on effectue la séparation du polymère ABSE du mélange partiellement polymérisé en utilisant un agent de dévolatilisation.

7. Procédé selon la revendication 1, dans lequel le mélange de polymérisation comprend jusqu'à 60% en poids, rapporté au monomère introduit dans le réacteur, d'un diluant.

8. Procédé selon la revendication 1, dans lequel le mélange de polymérisation comprend un initiateur choisi parmi les peroxycarbonates et les peresters qui favorisent le greffage et qui sont activés à la température réactionnelle qui est entre 70°C et 180°C.

9. Procédé selon la revendication 1, dans lequel on effectue les étapes suivantes :
A. on amène le caoutchouc et les monomères dans le premier réacteur de polymérisation avec une quantité de solides polymères de 20 à 35%, qui est agitée pour fournir une composition sensiblement uniforme, lesdits monomères et ledit caoutchouc sont amenés avec 10 à 50% rapportés aux monomères chargés d'un solvant, et une quantité efficace d'un initiateur choisi dans le groupe constitué par le perbenzoate de tert-butyle, le peroxy(isopropyl)carbonate de tert-butyle, le peroctoate de tert-butyle, le peroxyisononoate de tert-butyle et le monoperoxycarbonate de tert-butyl-2-éthylhexyle ;
B. on polymérise en outre un premier courant partiellement polymérisé dudit premier réacteur dans le second réacteur fonctionnant en continu avec une composition sensiblement uniforme dans l'ensemble pour produire un second courant partiellement polymérisé avec jusqu'à 70% de quantité de solides polymères ; et
C. on sépare un polymère ABSE du second courant partiellement polymérisé en utilisant un agent de dévolatilisation.

10. Procédé selon la revendication 1, dans lequel le courant d'amenée séparé de l'étape (ii) est exempt de n'importe quelle quantité substantielle dudit monomère ester et dudit caoutchouc dans celui-ci.

11. Procédé selon la revendication 9, dans lequel la quantité d'acrylonitrile dans l'amenée audit mélange est suffisante pour fournir au moins 20% en poids de monomère acrylonitrile dans le polymère ABSE.

12. Acrylonitrile-caoutchouc de butadiène-styrène-ester pouvant être obtenu selon le procédé de la revendication1.

13. Polymère tel que dans la revendication 12, dans lequel l'ester monomère est le fumarate de dibutyle.

14. Polymère tel que dans la revendication 12, dans lequel la phase caoutchouc est un homopolymère ou un copolymère de butadiène greffé.
